(19) **Europäisches Patentamt**
**European Patent Office**
**Office européen des brevets**

(11) **EP 3 933 360 B1**

(12) **EUROPEAN PATENT SPECIFICATION**

(45) Date of publication and mention
of the grant of the patent:
**05.06.2024 Bulletin 2024/23**

(51) International Patent Classification (IPC):
**G01J 5/02** *(2022.01)*

(21) Application number: **21173635.0**

(52) Cooperative Patent Classification (CPC):
**G01J 5/023;** G01J 2005/0077

(22) Date of filing: **12.05.2021**

(54) **INFRARED DETECTOR**

INFRAROT-DETEKTOR

DÉTECTEUR INFRAROUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2020 CN 202010607579**

(43) Date of publication of application:
**05.01.2022 Bulletin 2022/01**

(73) Proprietor: **Beijing North Gaoye Technology.Co.,
Ltd.**
**Beijing 100070 (CN)**

(72) Inventors:
• **WEI, Bin**
**Beijing, 100070 (CN)**
• **ZHAI, Guangjie**
**Beijing, 100070 (CN)**
• **ZHAI, Guangqiang**
**Beijing, 100070 (CN)**

(74) Representative: **Grünecker Patent- und
Rechtsanwälte
PartG mbB
Leopoldstraße 4
80802 München (DE)**

(56) References cited:
**EP-A1- 2 113 756      EP-A1- 2 208 975
US-A1- 2011 272 581      US-B2- 8 592 765**

## Description

TECHNICAL FIELD

The present application relates to the technical field of infrared detection, in particular, an infrared detector.

BACKGROUND

An infrared detector includes multiple semiconductor devices that are sensitive to infrared radiation and are specially adapted to converting infrared radiant energy into electrical energy. The infrared focal plane detector in the related art has problems such as the relatively great thermal conductivity of the infrared detector and the relatively poor performance of the infrared detector. For example, with respect to an infrared detector with a geometrically symmetrical design, two half-bridges of detector semiconductor pixels of the infrared detector are geometrically symmetrical in structure, and the length of the half-bridge with an electrical transmission function is equal to the length of the half-bridge without the electrical transmission function. However, since the mechanical strength and thermal conductivity of an electrode material are different from those of a support layer material, the speeds of heat from an infrared absorption plate to the corresponding two micro-bridge columns differ greatly, and thus the thermal conductivity of the entire infrared detector is relatively high and the detection performance of the infrared detector is relatively poor. Moreover, the infrared detector with the geometrically symmetrical design is subject to relatively great stress and deformation, leading to relatively poor mechanical stability and impact resistance, thereby leading to the relatively poor structural stability of the entire infrared detector.

Therefore, how to further reduce the thermal conductivity of the infrared detector, to improve the infrared detection performance of the infrared detector, and to further improve the structural stability of the infrared detector have become urgent problems to be solved.

The documents EP2113756A1 and EP2208975A1 disclose prior art examples.

SUMMARY

To solve the preceding technical problems or at least partially solve the preceding technical problems, the present application provides an infrared detector so that the total thermal conductivity of detector semiconductor pixels can be reduced, the infrared detection performance of the infrared detector can be improved, and the stability and impact resistance of the detector semiconductor pixels can be improved.

The invention is defined by the appended claims.

Embodiments of the present application provide an infrared detector. The infrared detector includes multiple detector semiconductor pixels arranged in an array. The multiple detector semiconductor pixels are configured to convert infrared radiant energy into electrical energy for infrared detection. Each of the multiple detector semiconductor pixels includes at least two beam structures.

Each of the at least two beam structures is respectively connected to an infrared absorption plate and a micro-bridge column.

Two parallel beam structures in each of the at least two beam structures that meet at a same node along a beam path from the infrared absorption plate to a corresponding micro-bridge column are a first half-bridge structure and a second half-bridge structure, respectively, and the first half-bridge structure and the second half-bridge structure form a thermally symmetrical structure.

The first half-bridge structure includes a support layer, an electrode layer, and a passivation layer. The second half-bridge structure includes a support layer. A length of the first half-bridge structure in the thermally symmetrical structure is greater than a length of the second half-bridge structure in the thermally symmetrical structure. A non-equilibrium difference in the thermal conductivity between the first half-bridge structure and the second half-bridge structure in the thermally symmetrical structure is less than or equal to 20%.

Optionally, a thermal conductivity of the first half-bridge structure in the thermally symmetrical structure is equal to a thermal conductivity of the second half-bridge structure in the thermally symmetrical structure.

Optionally, the length of the first half-bridge structure in the thermally symmetrical structure is $l_1$, the length of the second half-bridge structure in the thermally symmetrical structure is $l_2$, and $l_1$ and $l_2$ satisfy the formula described below.

$$\frac{l_1}{l_2} = \frac{k_1 w_1 t_1}{k_1 w_1 t_1 + k_2 w_2 t_2 + k_3 w_3 t_3}$$

$k_1$ denotes a thermal conductivity of the support layer, $k_2$ denotes a thermal conductivity of the electrode layer, $k_3$ denotes a thermal conductivity of the passivation layer, $w_1$ denotes a width of the support layer on each of the at least two beam structures, $w_2$ denotes a width of the electrode layer on each of the at least two beam structures, $w_3$ denotes a width of the passivation layer on each of the at least two beam structures, $t_1$ denotes an equivalent thickness of the support layer, $t_2$ denotes a thickness of the electrode layer, and $t_3$ denotes a thickness of the passivation layer.

Optionally, each of the at least two beam structures having the thermally symmetrical structure further includes at least one connecting rod. The connecting rod is configured to separate the first half-bridge structure and the second half-bridge structure in the thermally symmetrical structure.

The first half-bridge structure and the second half-bridge structure are respectively located on two sides of the connecting rod along a direction perpendicular to the connecting rod, respectively, and the connecting rod includes a support layer, an electrode layer, and a passivation layer.

Optionally, a distribution position of a first half-bridge structure in a thermally symmertrical structure located on one side of the infrared absorption plate is opposite to a distribution position of a first half-bridge structure in a thermally symmertrical structure located on another side of the infrared absorption plate, and a distribution position of a second half-bridge structure in the thermally symmertrical structure located on the one side of the infrared absorption plate is opposite to a distribution position of a second half-bridge structure in the thermally symmertrical structure located on the another side of the infrared absorption plate.

Optionally, each of the at least two beam structures has two connecting points with the infrared absorption plate.

Optionally, each of the at least two beam structures is linearly overlapped on a corresponding micro-bridge column.

Optionally, each of the multiple detector semiconductor pixels includes one or two groups of two micro-bridge columns arranged diagonally.

Optionally, each of the multiple detector semiconductor pixels includes a first beam structure, a second beam structure, a third beam structure and a fourth beam structure arranged, where the first beam structure and the second beam structure are arranged along a first direction, the third beam structure and the fourth beam structure are arranged along a second direction, and the first direction is perpendicular to the second direction.

The first beam structure and the second beam structure each include the thermally symmetrical structure. The third beam structure and the fourth beam structure include only the support layer. A thermal conductivity of the third beam structure is less than or equal to a thermal conductivity of the first beam structure or a thermal conductivity of the second beam structure, and a thermal conductivity of the fourth beam structure is less than or equal to the thermal conductivity of the first beam structure or the thermal conductivity of the second beam structure.

Optionally, each of the at least two beam structures having the thermally symmetrical structure includes at least one folded structure, the at least one folded structure is correspondingly provided with a support rod, the support rod includes a support layer, and the support rod and a folded part of the at least one folded structure form a rectangle.

Optionally, a non-equilibrium difference in the thermal conductivity between the support rod and other three sides of the rectangle where the support rod is located is less than or equal to 20%.

Optionally, a thermal conductivity of the support rod is the same as a thermal conductivity of the structure of the other three sides of the rectangle where the support rod is located.

Optionally, at least one corner in each of the at least two beam structures is an arc-shaped corner; and/or a width of the support rod is greater than or equal to a set width.

Optionally, a thickness of the support layer on the first half-bridge structure is the same as or different from a thickness of the support layer on the second half-bridge structure.

Optionally, the thickness of the support layer is greater than or equal to 100 angstroms and less than or equal to 2000 angstroms, the thickness of the electrode layer is greater than or equal to 100 angstroms and less than or equal to 500 angstroms, and the thickness of the passivation layer is greater than or equal to 50 angstroms and less than or equal to 2000 angstroms.

Optionally, the support layer is made of one or more of silicon oxide, silicon nitride, silicon oxynitride, and amorphous carbon, the passivation layer is made of one or more of silicon oxide, silicon nitride, silicon oxynitride, and amorphous carbon, and the electrode layer is made of titanium, titanium nitride, or nickel-chromium alloy.

Compared with the related art, the technical solutions provided in embodiments of the present application have the advantages described below.

According to embodiments of the present application, an infrared detector includes multiple detector semiconductor pixels arranged in an array. The multiple detector semiconductor pixels are configured to convert infrared radiant energy into electrical energy for infrared detection. Each of the multiple detector semiconductor pixels includes at least two beam structures. Each of the at least two beam structures is respectively connected to an infrared absorption plate and a micro-bridge column. Two parallel beam structures in each of the at least two beam structures that meet at a same node along a beam path from the infrared absorption plate to a corresponding micro-bridge column are a first half-bridge structure and a second half-bridge structure, respectively, and the first half-bridge structure and the second half-bridge structure form a thermally symmetrical structure. The first half-bridge structure includes a support layer, an electrode layer, and a passivation layer. The second half-bridge structure includes a support layer. A length of the first half-bridge structure in the thermally symmetrical structure is greater than a length of the second half-bridge structure in the thermally symmetrical structure. A non-equilibrium difference in the thermal conductivity between the first half-bridge structure and the second half-bridge structure in the thermally symmetrical structure is less than or equal to 20%. In this manner, the first half-bridge structure and the second half-bridge structure with the non-equilibrium difference in the thermal conductivity less than or equal to 20% form the thermally symmetrical structure so that the total thermal conductivity of the multiple detector semiconductor pixels can be further reduced, the infrared detection performance of the infrared detector can be improved, the stress and deformation to which a micro-bridge structure is subject under the same force can be reduced, the stability and impact resistance of the multiple detector semiconductor pixels can be improved, the structural stability of the entire infrared detector can be improved, and the mechanical strength of the infrared detector can be enhanced.

BRIEF DESCRIPTION OF DRAWINGS

The drawings herein are incorporated into the specification, constitute a part of the specification, show embodiments in accordance with the present application, and are used to explain the principle of the present application together with the specification.

To illustrate the technical solutions in embodiments of the present application or the technical solutions in the related art more clearly, drawings used in the description of the embodiments or the related art will be briefly described below. Apparently, those of ordinary skill in the art may obtain other drawings based on the drawings described below on the premise of paying no creative work.

FIG. 1 is a perspective view of a detector semiconductor pixel according to an embodiment of the present application;

FIG. 2 is a partial top view of a detector semiconductor pixel according to an embodiment of the present application;

FIG. 3 is a perspective exploded view of a detector semiconductor pixel according to an embodiment of the present application;

FIG. 4 is a perspective view of another detector semiconductor pixel according to an embodiment of the present application;

FIG. 5 is a perspective view of another detector semiconductor pixel according to an embodiment of the present application;

FIG. 6 is a perspective view of another detector semiconductor pixel according to an embodiment of the present application;

FIG. 7 is a perspective view of another detector semiconductor pixel according to an embodiment of the present application;

FIG. 8 is a perspective view of another detector semiconductor pixel according to an embodiment of the present application;

FIG. 9 is a perspective view of another detector semiconductor pixel according to an embodiment of the present application;

FIG. 10 is a perspective view of another detector semiconductor pixel according to an embodiment of the present application;

FIG. 11 is a perspective view of another detector semiconductor pixel according to an embodiment of the present application;

FIG. 12 is a perspective view of another detector semiconductor pixel according to an embodiment of the present application;

FIG. 13 is a perspective view of a micro-bridge structure in the related art;

FIG. 14 is a perspective view of another detector semiconductor pixel according to an embodiment of the present application;

FIG. 15 is a partial top view of another detector semiconductor pixel according to an embodiment of the present application;

FIG. 16 is a perspective view of another detector semiconductor pixel according to an embodiment of the present application; and

FIG. 17 is a perspective view of an infrared detector according to an embodiment of the present application.

DETAILED DESCRIPTION

To understand the preceding objects, features, and advantages of the present application more clearly, the solutions of the present application will be further described below. It is to be noted that if not in collision, embodiments and features therein in the present application may be combined with each other.

In the following description, to fully understand the present application, many specific details are set forth, but the present application can also be implemented in other ways different from those described herein; apparently, the embodiments in the specification are only a part of embodiments of the present application and not all of the embodiments.

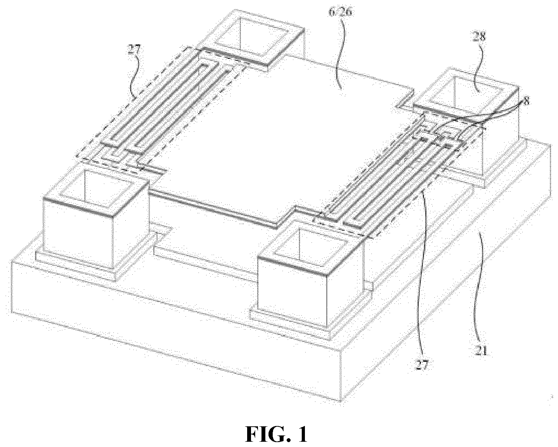

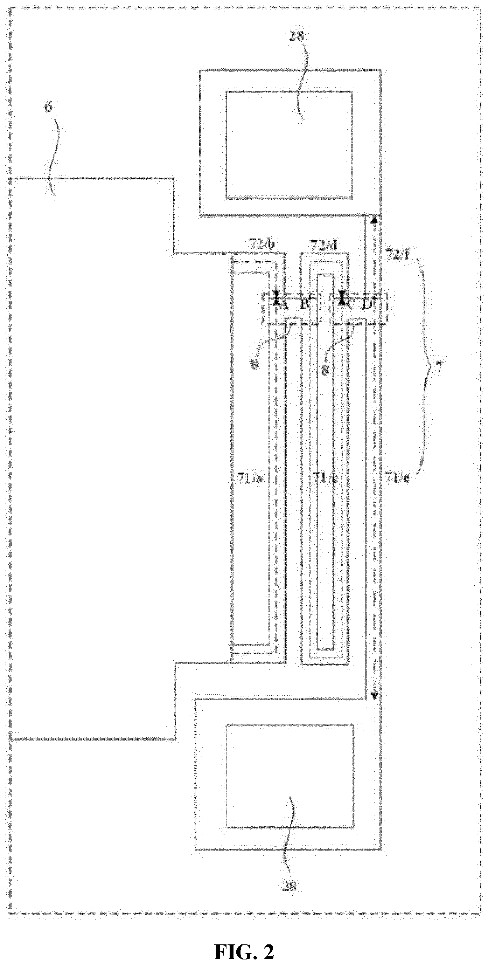

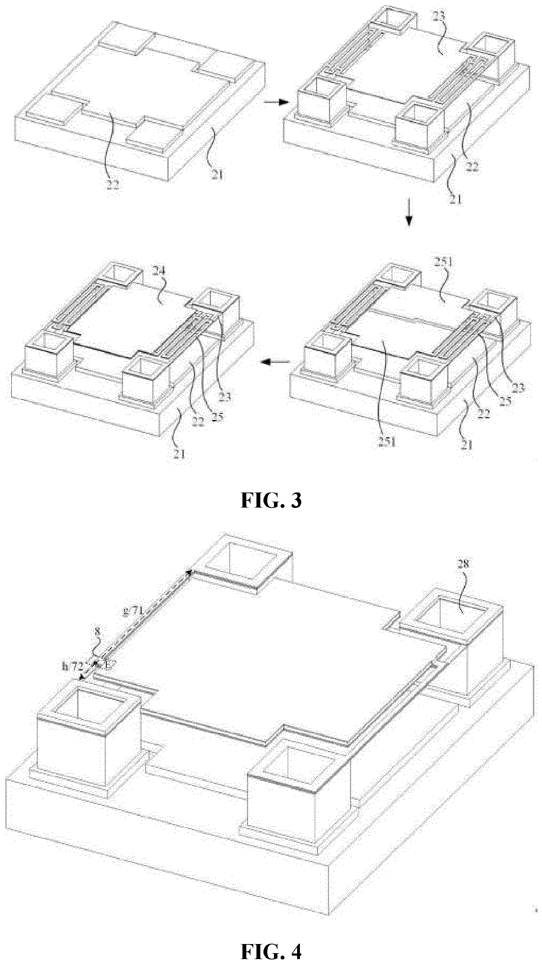

FIG. 1 is a perspective view of a detector semiconductor pixel according to an embodiment of the present application, FIG. 2 is a partial top view of a detector semiconductor pixel according to an embodiment of the present application, and FIG. 3 is a perspective exploded view of a detector semiconductor pixel according to an embodiment of the present application. In conjunction with FIGS. 1 to 3, an infrared detector includes multiple detector semiconductor pixels arranged in an array. The multiple detector semiconductor pixels are configured to convert infrared radiant energy into electrical energy for infrared detection. That is, the infrared detector includes multiple semiconductor devices that are sensitive to infrared radiation and are adapted to converting infrared radiant energy into electrical energy. Each detector semiconductor pixel includes at least two beam structures 27. In an embodiment, each detector semiconductor pixel includes two beam structures 27. Each beam structure 27 is respectively connected to an infrared absorption plate 6 and a micro-bridge column 28.

In an embodiment, each detector semiconductor pixel includes a substrate 21, an infrared absorption plate 6, and a beam structure 27. The substrate 21 includes a readout circuit for reading and processing an electrical signal and a reflective layer 22 located on the substrate 21, and the reflection layer 22 is used for secondary reflection of infrared radiation. The infrared absorption plate 6 includes a support layer 23, an electrode layer 25, a thermosensitive layer 24, and a passivation layer 26. The electrode layer 25 is located on the support layer 23, the thermosensitive layer 24 is located on the electrode layer 25, and the passivation layer 26 is located on the thermosensitive layer 24 and the electrode layer 25. The infrared absorption plate 6 is configured to absorb the infrared radiation energy of a target object. The beam structure 27 includes a support layer 23, an electrode layer 25, and a passivation layer 26. The beam structure 27 is a component for electrical transmission and heat conduction. The support layer 23 plays the role of structural support, the thermosensitive layer 24 is only located on the infrared absorption plate 6 and is configured to convert a temperature signal into an electrical signal, the electrode layer 25 is configured to adjust the resistance of the thermosensitive layer 24 and transmit the electrical signal of the thermosensitive layer 24 to the readout circuit of the substrate through the beam structure 27, and the passivation layer 26 is configured to protect the thermosensitive layer 24 and the electrode layer 25.

In an embodiment, the thermosensitive layer 24 may be made of vanadium oxide, silicon, or titanium oxide. Correspondingly, the infrared detector may correspond to a vanadium oxide sensor, an amorphous silicon sensor, or a titanium oxide sensor, and the infrared detector may also be a thermoelectric pile sensor or a diode sensor. In an embodiment, the support layer 23 may be made of one or more of silicon oxide, silicon nitride, silicon oxynitride, or amorphous carbon, the passivation layer 26 may be made of one or more of silicon oxide, silicon nitride, silicon oxynitride, or amorphous carbon, and the electrode layer 25 may be made of titanium, titanium nitride, or nickel-chromium alloy.

In an embodiment, as shown in FIGS. 1 to 3, the electrode layer 25 is located on one side of the thermosensitive layer 24 facing toward the substrate 21, and it is also feasible that the electrode layer 25 is located on one side of the thermosensitive layer 24 facing toward the passivation layer 26. In an embodiment, in FIG. 3, the electrode layer 25 includes two block-shaped large-area patterned electrodes 251 distributed on the infrared absorption plate 6, and it is also feasible that the electrode layer 25 includes two narrow-band patterned electrodes distributed on the infrared absorption plate 6. Embodiments of the present application do not specifically limit the area of the patterned electrodes.

In each of the at least two beam structures 27, in a beam path from the infrared absorption plate 6 to a corresponding micro-bridge column 28, two parallel beam structures that meet at the same node are a first half-bridge structure 71 and a second half-bridge structure 72, respectively, and the first half-bridge structure 71 and the second half-bridge structure 72 form a thermally symmetrical structure 7. In FIGS. 1 to 3, each detector semiconductor pixel includes two beam structures 27. In each of the two beam structures 27, in the beam path from the infrared absorption plate 6 to the corresponding micro-bridge column 28, two parallel beam structures that meet at the same node are the first half-bridge structure 71 and the second half-bridge structure 72, respectively, and the first half-bridge structure 71 and the second half-bridge structure 72 form the thermally symmetrical structure 7.

In conjunction with FIGS. 1 to 3, mainly referring to FIG. 2, a parallel beam structure a and a parallel beam structure b meet at the same node A, a parallel beam structure c and a parallel beam structure d meet at a node B and a node C, and a parallel beam structure e and a parallel beam structure f meet at the same node D. Moreover, the length of the first half-bridge structure 71 in the thermally symmetrical structure 7 is greater than the length of the second half-bridge structure 72 in the thermally symmetrical structure 7. Therefore, the parallel beam structure a is the first half-bridge structure 71, the parallel beam structure b is the second half-bridge structure 72, and the parallel beam structure a and the parallel beam structure b form the thermally symmetrical structure 7; the parallel beam structure c is the first half-bridge structure 71, the parallel beam structure d is the second half-bridge structure 72, and the parallel beam structure c and the parallel beam structure d form the thermally symmetrical structure 7; the parallel beam structure e is the first half-bridge structure 71, the parallel beam structure f is the second half-bridge structure 72, and the parallel beam structure e and the parallel beam structure f form the thermally symmetrical structure 7.

The heat of each detector semiconductor pixel is conducted from the infrared absorption plate 6 in the middle of the detector semiconductor pixel to two micro-bridge columns 28 connected to the same beam structure 27. The first half-bridge structure 71 includes a support layer 23, an electrode layer 25, and a passivation layer 26, and the second half-bridge structure 72 includes a support layer 23. That is, the thickness of the first half-bridge structure 71 is greater than the thickness of the second half-bridge structure 72. In the case where the length of the first half-bridge structure 71 is equal to the thickness of the second half-bridge structure 72, since the first half-bridge structure 71 has a relatively great thickness, the heat conduction speed on the first half-bridge structure 71 is faster than the heat conduction speed on the second half-bridge structure 72. In embodiments of the present application, the length of the first half-bridge structure 71 and the length of the second half-bridge structure 72 are designed asymmetrically, that is, the length of the first half-bridge structure 71 is set to be greater than the length of the second half-bridge structure 72 so that the heat conduction speed on the first half-bridge structure 71 with the faster heat conduction speed due to the thickness factor is slowed down, thereby achieving that the non-equilibrium difference in the thermal conductivity between the first half-bridge structure 71 and the second half-bridge structure 72 in the thermally symmetrical structure 7 is less than or equal to 20%, that is, the difference in the heat conduction speed between the first half-bridge structure 71 and the second half-bridge structure 72 in the thermally symmetrical structure 7 is less than or equal to 20%. The case where the heat conduction speed on the first half-bridge structure 71 is 1 is used as an example, and thus the heat conduction speed on the second half-bridge structure 72 is greater than or equal to 0.8 and less than or equal to 1.2.

In conjunction with FIGS. 1 to 3, the thermal conductivity of the parallel beam structure a is similar to the thermal conductivity of the parallel beam structure b, the thermal conductivity of the parallel beam structure c is similar to the thermal conductivity of the parallel beam structure d, and the thermal conductivity of the parallel beam structure e is similar to the thermal conductivity of the parallel beam structure f. The heat on the infrared absorption plate 6 is simultaneously transmitted to two endpoints of the beam structure 27 connecting the infrared absorption plate 6, and then after passing through the parallel beam structure a and the parallel beam structure b, the heat is basically simultaneously transmitted to the parallel beam structure c and the parallel beam structure d. After passing through the parallel beam structure c and the parallel beam structure d, the heat is basically simultaneously transmitted to the parallel beam structure e and the parallel beam structure f. After passing through the parallel beam structure e and the parallel beam structure f, the heat is basically simultaneously transmitted to the upper micro-bridge column 28 and the lower micro-bridge column 28 and dissipated through the substrate 21.

In this manner, the time during which the heat passes from the infrared absorption plate 6 through the first half-bridge structure 71 to the lower micro-bridge column 28 is similar to the time during which the heat passes from the infrared absorption plate 6 through the second half-bridge structure 72 to the upper micro-bridge column 28, thereby achieving the thermal balance on the beam structure 27, reducing the total thermal conductivity of the detector semiconductor pixels, and optimizing the infrared detector composed of the detector semiconductor pixels. For example, the infrared detection performance of the infrared focal plane detector makes the noise equivalent temperature difference (NETD) of the infrared detector increased by more than 15%.

Moreover, in embodiments of the present application, the length of the first half-bridge structure 71 with a relatively great thickness is greater than the length of the second half-bridge structure 72 with a relatively small thickness. Compared with the symmetrical structure in which the length of the first half-bridge structure 71 is exactly the same as the length of the second half-bridge structure 72, the stress and deformation to which the detector semiconductor pixels are subject under the same force are reduced. Under the same force, the stress to which the detector semiconductor pixels are subject is reduced by at least 10%, and the deformation to which the detector semiconductor pixels are subject is reduced by at least 50 %, so that the stability and impact resistance of the detector semiconductor pixels are improved, thereby improving the structural stability of the entire infrared detector, and enhancing the mechanical strength of the infrared detector.

It is to be noted that as shown in FIGS. 1 to 3, in an embodiment, each detector semiconductor pixel includes three thermally symmetrical structures 7 formed by three first half-bridge structures 71 and three second half-bridge structures 72. Embodiments of the present application do not limit the specific number of the thermally symmetrical structures 7 included in each detector semiconductor pixel, and it is sufficient to ensure that each detector semiconductor pixel includes at least one thermally symmetrical structure 7.

Optionally, the equivalent thickness of the support layer 23 may be greater than or equal to 100 angstroms and less than or equal to 2000 angstroms, the thickness of the electrode layer 25 is greater than or equal to 100 angstroms and less than or equal to 500 angstroms, and the thickness of the passivation layer 26 is greater than or equal to 50 angstroms and less than or equal to 2000 angstroms. In an embodiment, the thicknesses of the support layer 23, the electrode layer 25, and the passivation layer 26 on the beam structure 27 are configured so that the thermal conductivity of the beam structure 27 is optimized, and thus the thermal conductivity of the detector semiconductor pixels is optimized. The support layer 23, the electrode layer 25, and the passivation layer 26 on the beam structure 27 are formed through the plasma-enhanced chemical vapor deposition (PECVD) process or the atomic layer deposition (ALD) process.

Optionally, as shown in FIGS. 1 to 3, the overall thickness of the support layer 23 is consistent, that is, the thickness of the support layer 23 included in the first half-bridge structure 71 is the same as the thickness of the support layer 23 included in the second half-bridge structure 72, and it is also feasible that the thickness of the support layer 23 included in the first half-bridge structure 71 is different from the thickness of the support layer 23 included in the second half-bridge structure 72. For example, the thickness of the support layer 23 included in the first half-bridge structure 71 is greater than the thickness of the support layer 23 included in the second half-bridge structure 72, or the thickness of the support layer 23 included in the first half-bridge structure 71 is less than the thickness of the support layer 23 included in the second half-bridge structure 72. The thickness of the support layer 23 included in the first half-bridge structure 71 is different from the thickness of the support layer 23 included in the second half-bridge structure 72, which is beneficial to further improve the stability and impact resistance of the detector semiconductor pixels.

In an embodiment, the thermal conductivity of the first half-bridge structure 71 in the thermally symmetrical structure 7 may be the same as the thermal conductivity of the second half-bridge structure 72 in the thermally symmetrical structure 7. In an embodiment, in conjunction with FIGS. 1 to 3, the heat on the infrared absorption plate 6 is simultaneously transmitted to two endpoints of the beam structure 27 connecting the infrared absorption plate 6; and then after passing through the parallel beam structure a and the parallel beam structure b, the heat is simultaneously transmitted to the parallel beam structure c and the parallel beam structure d. After passing through the parallel beam structure c and the parallel beam structure d, the heat is simultaneously transmitted to the parallel beam structure e and the parallel beam structure f. After passing through the parallel beam structure e and the parallel beam structure f, the heat is simultaneously transmitted to the upper micro-bridge column 28 and the lower micro-bridge column 28 and dissipated through the substrate 21. In this manner, the time during which the heat passes from the infrared absorption plate 6 through the first half-bridge structure 71 to the lower micro-bridge column 28 is the same as the time during which the heat passes from the infrared absorption plate 6 through the second half-bridge structure 72 to the upper micro-bridge column 28, thereby achieving the thermal balance on the beam structure 27 to the greatest extent, minimizing the total thermal conductivity of the detector semiconductor pixels, and optimizing the infrared detector composed of the detector semiconductor pixels to the greatest extent, such as the infrared detection performance of the infrared focal plane detector.

Optionally, in conjunction with FIGS. 1 to 3, the length of the first half-bridge structure 71 in the thermally symmetrical structure 7 may be $l_1$, the length of the second half-bridge structure 72 in the thermally symmetrical structure 7 may be $l_2$, and $l_1$ and $l_2$ satisfy the formula described below.

$$\frac{l_1}{l_2} = \frac{k_1 w_1 t_1}{k_1 w_1 t_1 + k_2 w_2 t_2 + k_3 w_3 t_3}$$

$k_1$ denotes the thermal conductivity of the support layer 23, $k_2$ denotes the thermal conductivity of the electrode layer 25, $k_3$ denotes the thermal conductivity of the passivation layer 26, $w_1$ denotes the width of the support layer 23 on the beam structure, $w_2$ denotes the width of the electrode layer 25 on the beam structure, $w_3$ denotes the width of the passivation layer 26 on the beam structure, $t_1$ denotes the equivalent thickness of the support layer 23, $t_2$ denotes the thickness of the electrode layer 25, and $t_3$ denotes the thickness of the passivation layer 26.

In an embodiment, in conjunction with FIGS. 1 to 3, the thermal conductivity Gi of the first half-bridge structure 71 satisfies the calculation formula described below.

$$G_1 = k_1 \frac{w_1 t_1}{l_2} + k_2 \frac{w_2 t_2}{l_2} + k_3 \frac{w_3 t_3}{l_2}$$

The thermal conductivity $G_2$ of the second half-bridge structure 72 satisfies the calculation formula described below

$$G_2 = k_1 \frac{w_1 t_1}{l_1}$$

To achieve the minimum thermal conductivity of the detector semiconductor pixels, the sum of $G_1$ and $G_2$ is the minimum. Since the total length of the beam structure 27 is consistent and the thermal conductivity is inversely proportional to the length, only in the case where the thermal conductivity of the first half-bridge structure 71 is the same as the thermal conductivity of the second half-bridge structure 72, that is, Gi is equal to $G_2$, the total thermal conductivity of the detector semiconductor pixels reaches the minimum value. From the preceding formula, it can be obtained that in the case where Gi is equal to $G_2$, $l_1$ and $l_2$ satisfy the formula described below.

$$\frac{l_1}{l_2} = \frac{k_1 w_1 t_1}{k_1 w_1 t_1 + k_2 w_2 t_2 + k_3 w_3 t_3}$$

It is to be noted that with respect to the equivalent thickness of the support layer 23 described in embodiments of the present application, in the case where the thickness of the support layer 23 included in the first half-bridge structure 71 is equal to the thickness of the support layer 23 included in the second half-bridge structure 72, the entire film thickness of the support layer 23 is consistent, and the equivalent thickness of the support layer 23 is the original thickness of the support layer 23. In the case where the thickness of the support layer 23 included in the first half-bridge structure 71 is not equal to the thickness of the support layer 23 included in the second half-bridge structure 72, the entire film thickness of the support layer 23 is inconsistent, and the equivalent thickness of the support layer 23 is an average thickness of the support layer 23.

Optionally, in conjunction with FIGS. 1 to 3, the beam structure 27 including the thermally symmetrical structure 7 may be further provided with at least one connecting rod 8, and the connecting rod 8 is configured to separate the first half-bridge structure 71 and the second half-bridge structure 72 in the thermally symmetrical structure 7. The first half-bridge structure 71 and the second half-bridge structure 72 are located on two sides of the connecting rod 8 along a direction perpendicular to the connecting rod 8, respectively, and the connecting rod 8 includes a support layer 23, an electrode layer 25, and a passivation layer 26.

In an embodiment, as shown in FIGS. 1 to 3, two beam structures 27 both include connecting rods 8, each beam structure 27 includes two connecting rods 8, and the connecting rod 8 is configured to separate the first half-bridge structure 71 and the second half-bridge structure 72 in the thermally symmetrical structure 7. The first half-bridge structure 71 and the second half-bridge structure 72 are located on two sides of the connecting rod 8 along a direction perpendicular to the connecting rod 8, respectively, that is, the first half-bridge structure 71 and the second half-bridge structure 72 in the thermally symmetrical structure 7 are separated by the connecting rod 8 and connected by the connecting rod 8. The connecting rod 8 includes a support layer 23, an electrode layer 25, and a passivation layer 26 and is configured to separate the first half-bridge structure 71 including the support layer 23, the electrode layer 25, and the passivation layer 26 and the second half-bridge structure 72 including only the support layer 23. Similarly, the first half-bridge structure 71 and the second half-bridge structure 72 with the non-equilibrium difference in the thermal conductivity less than or equal to 20% form the thermally symmetrical structure 7 so that the total thermal conductivity of the detector semiconductor pixels can be reduced, the infrared detection performance of the infrared detector can be improved, the stress and deformation to which a micro-bridge structure is subject under the same force can be reduced, the stability and impact resistance of the detector semiconductor pixels can be improved, the structural stability of the entire infrared detector can be improved, and the mechanical strength of the infrared detector can be enhanced.

It is to be noted that embodiments of the present application do not specifically limit the number of connecting rods 8. The position and specific number of connecting rods 8 may be set according to the number of folds in the beam structure 27 and the distribution of the first half-bridge structure 71 and the second half-bridge structure 72.

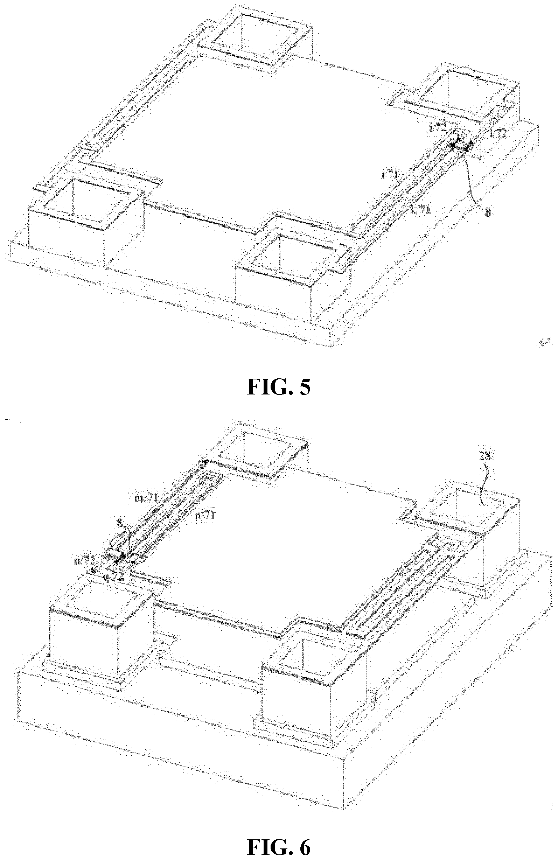

In an embodiment, as shown in FIGS. 1 to 3, a single beam structure 27 is folded for 6 times, and the single beam structure 27 includes three thermally symmetrical structures 7. It is also feasible that as shown in FIG. 4, the single beam structure 27 is set to be folded once, and the single beam structure 27 includes one thermally symmetrical structure, where a parallel beam structure g is the first half-bridge structure 71, a parallel beam structure h is the second half-bridge structure 72, the parallel beam structure g and the parallel beam structure h meet at a node E, the first half-bridge structure 71 and the second half-bridge structure 72 form one thermally symmetrical structure, and the single beam structure 27 includes one connecting rod 8. It is also feasible that as shown in FIG. 5, a single beam structure 27 is set to be folded for 3 times, and the single beam structure 27 includes two thermally symmetrical structures, where a parallel beam structure i and a parallel beam structure j form one thermally symmetrical structure, the parallel beam structure i is the first half-bridge structure 71, and the parallel beam structure j is the second half-bridge structure 72; a parallel beam structure k and a parallel beam structure 1 form another thermally symmetrical structure, the parallel beam structure k is the first half-bridge structure 71, and the parallel beam structure 1 is the second half-bridge structure 72, and the single beam structure 27 includes one connecting rod 8. It is also feasible that as shown in FIG. 6, a single beam structure 27 is set to be folded for 5 times, and the single beam structure 27 includes two thermally symmetrical structures, where a parallel beam structure m and a parallel beam structure n form one thermally symmetrical structure, the parallel beam structure m is the first half-bridge structure 71, and the parallel beam structure n is the second half-bridge structure 72; a parallel beam structure p and a parallel beam structure q form another thermally symmetrical structure, the parallel beam structure p is the first half-bridge structure 71, and the parallel beam structure q is the second half-bridge structure 72, and the single beam structure 27 includes two connecting rods 8.

Optionally, each detector semiconductor pixel may include one or two groups of two micro-bridge columns 28 arranged diagonally. As shown in FIGS. 1 to 6, in an embodiment, each detector semiconductor pixel includes two groups of two micro-bridge columns 28 arranged diagonally, that is, each detector semiconductor pixel includes four micro-bridge columns 28; or each detector semiconductor pixel includes one group of two micro-bridge columns 28 arranged diagonally, that is, each detector semiconductor pixel includes two micro-bridge columns 28.

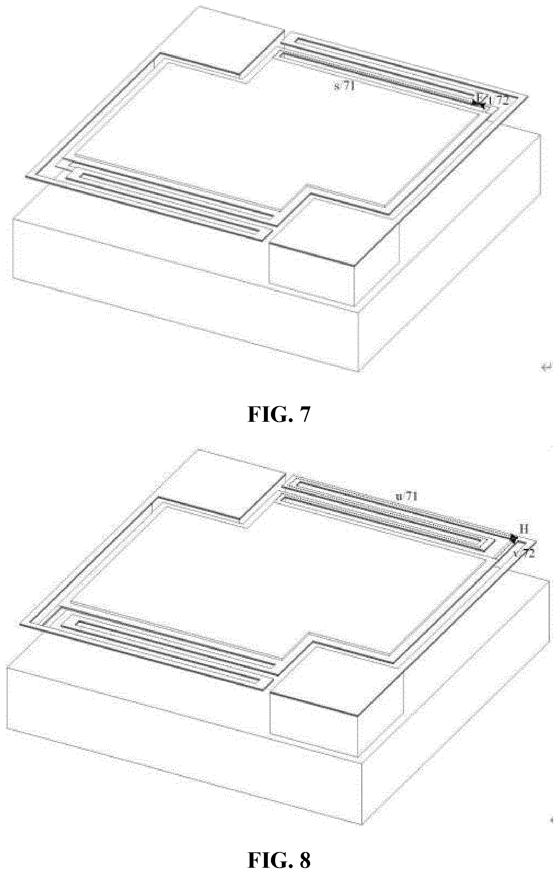

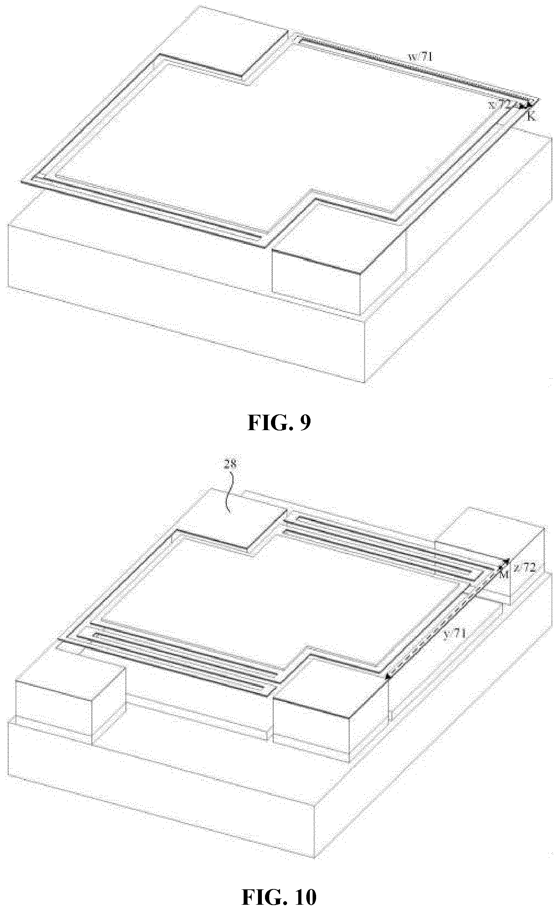

In an embodiment, as shown in FIG. 7, each detector semiconductor pixel may include two beam structures, and a single beam structure includes one thermally symmetrical structure, where a parallel beam structure s is the first half-bridge structure 71, a parallel beam structure t is the second half-bridge structure 72, and the parallel beam structure s and the parallel beam structure t meet at a node F. It is also feasible that as shown in FIG. 8, each detector semiconductor pixel includes two beam structures, and a single beam structure includes one thermally symmetrical structure, where a parallel beam structure u is the first half-bridge structure 71, a parallel beam structure v is the second half-bridge structure 72, and the parallel beam structure u and the parallel beam structure v meet at a node H. It is also feasible that as shown in FIG. 9, each detector semiconductor pixel includes two beam structures, and a single beam structure includes one thermally symmetrical structure, where a parallel beam structure w is the first half-bridge structure 71, a parallel beam structure x is the second half-bridge structure 72, and the parallel beam structure w and the parallel beam structure x meet at a node K.

Moreover, as shown in FIGS. 1 to 6, in an embodiment, four micro-bridge columns 28 are arranged symmetrically, that is, the four micro-bridge columns 28 are located at four top corners of a rectangle. It is also feasible that as shown in FIG. 10, four micro-bridge columns 28 are arranged asymmetrically, each detector semiconductor pixel includes two beam structures, and a single beam structure includes one thermally symmetrical structure, where a parallel beam structure y is the first half-bridge structure 71, a parallel beam structure z is the second half-bridge structure 72, and the parallel beam structure y and the parallel beam structure z meet at a node M.

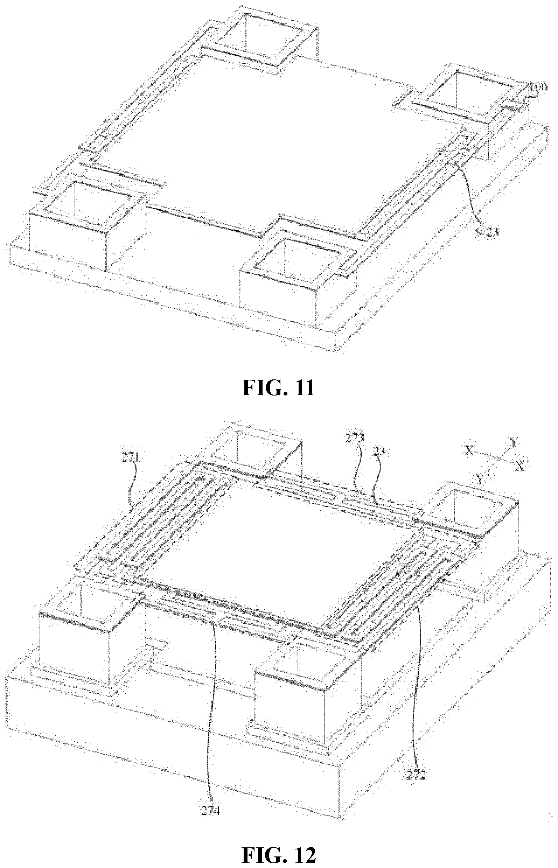

Optionally, in conjunction with FIGS. 1 to 10, the beam structure 27 may be linearly overlapped on a corresponding micro-bridge column 28, that is, the outermost beam of the beam structure 27 facing away from the infrared absorption plate 6 is linearly and directly overlapped on a corresponding micro-bridge column 28, thereby improving the stability of the overlap between the beam structure 27 and the micro-bridge column 28, and improving the mechanical strength and structural stability of the detector semiconductor pixels. It is also feasible that as shown in FIG. 11, the beam structure is connected to a corresponding micro-bridge column 28 through an overlapping structure 100. To improve the stability of the beam structure, the width of the overlapping structure 100 may be increased. For example, the line width of the overlapping structure 100 is increased as a whole so that the stress to which the beam structure is subject is reduced and the structural strength of the beam structure is improved.

FIG. 12 is a perspective view of another detector semiconductor pixel according to an embodiment of the present application. As shown in FIG. 12, each detector semiconductor pixel may include four beam structures, that is, each detector semiconductor pixel includes a first beam structure 271 and a second beam structure 272 which are arranged along a first direction XX', and a third beam structure 273 and a fourth beam structure 274 which are arranged along a second direction YY', where the first direction XX' is perpendicular to the second direction YY'. The first beam structure 271 and the second beam structure 272 both include a thermally symmetrical structure. For the position of the thermally symmetrical structure, refer to FIGS. 1 to 3. The third beam structure 273 and the fourth beam structure 274 both include only the support layer 23, that is, the third beam structure 273 and the fourth beam structure 274 do not include a thermally symmetrical structure, the first beam structure 271 and the second beam structure 272 both satisfy a thermally symmetrical relationship, and the third beam structure 273 and the fourth beam structure 274 satisfy a thermally symmetrical relationship.

As shown in FIG. 12, the thermal conductivity of the third beam structure 273 is less than or equal to the thermal conductivity of the first beam structure 271 or the thermal conductivity of the second beam structure 272, and the thermal conductivity of the fourth beam structure 274 is less than or equal to the thermal conductivity of the first beam structure 271 or the thermal conductivity of the second beam structure 272, which is beneficial to reduce the total thermal conductivity of the detector semiconductor pixels and optimize the infrared detection performance of the infrared detector composed of the detector semiconductor pixels.

Optionally, each beam structure 27 has two connecting points with the infrared absorption plate 6. As shown in FIGS. 1 to 3, FIG. 5, FIGS. 7 to 9, and FIG. 11, each beam structure 27 has two connecting points with the infrared absorption plate 6. In FIG. 12, one of two beam structures 27 is located above the infrared absorption plate 6, the other one of the two beam structures 27 is located below the infrared absorption plate 6, and the two beam structures 27 both have two connecting points with the infrared absorption plate 6.

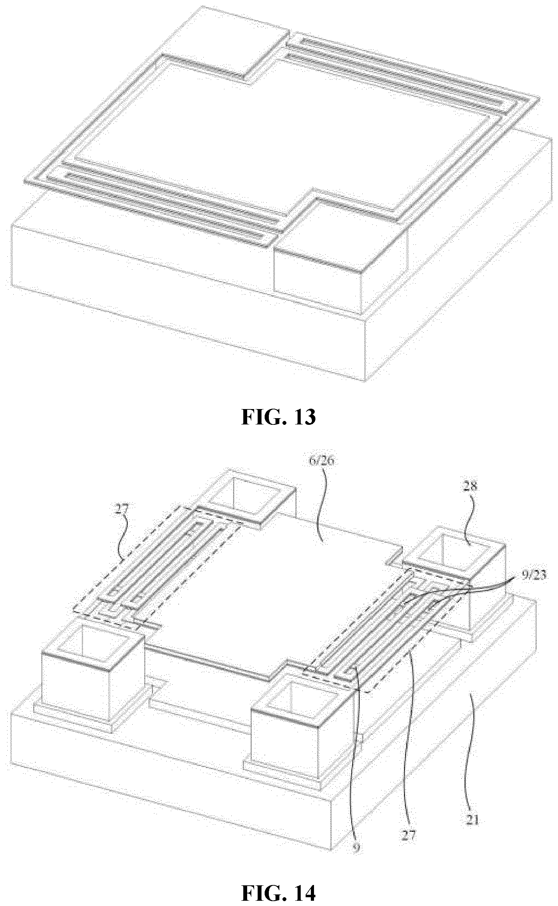

FIG. 13 is a perspective view of a micro-bridge structure in the related art. The micro-bridge structure shown in FIG. 13 adopts a half-bridge configuration. Each beam structure includes a support layer, an electrode layer, and a passivation layer, and the structural stability is relatively poor. Since one end of each of two beam structures is connected to an infrared absorption plate and another end of each of the two beam structures is connected to a micro-bridge column, the structural freedom degree is high and the stability is poor. To improve the structural stability, a thickened beam structure needs to be used. However, the beam structure and the infrared absorption plate are manufactured at the same time. An increase in the thickness of the beam structure causes an increase in the thickness of the infrared absorption plate, and the thickening of the beam structure may lead to the heat capacity of the micro-bridge structure and the poor performance of the infrared detector of the detector. Alternatively, the thickness of the beam structure may be set to be relatively great, and the thickness of the infrared absorption plate is different from the thickness of the beam structure. However, in this manner, the process of the micro-bridge structure is complicated and the yield of infrared detectors is reduced.

In embodiments of the present application, each beam structure 27 has two connecting points with the infrared absorption plate 6 so that the freedom degree of the beam structure 27 can be effectively reduced, the mechanical stability of the beam structure 27 can be improved, and the stability of the detector semiconductor pixels can be improved. Moreover, the manufacturing process is simple, and no additional manufacturing process is needed.

Optionally, in conjunction with FIGS. 1 to 12, a distribution position of the first half-bridge structure 71 and a distribution position of the second half-bridge structure 72 in the thermally symmetrical structure 7 located on one side of the infrared absorption plate 6 are opposite to a distribution position of the first half-bridge structure 71 and a distribution position of the second half-bridge structure 72 in the thermally symmetrical structure 7 located on another side of the infrared absorption plate 6, respectively. In an embodiment, using FIGS. 1 to 6 and FIGS. 10 to 12 as an example, the first half-bridge structure 71 in the thermally symmetrical structure 7 located on the left side of the infrared absorption plate 6 is on the upper side of the infrared absorption plate 6, and the second half-bridge structure 72 in the thermally symmetrical structure 7 located on the left side of the infrared absorption plate 6 is on the lower side of the infrared absorption plate 6; the first half-bridge structure 71 in the thermally symmetrical structure 7 located on the right side of the infrared absorption plate 6 is on the lower side of the infrared absorption plate 6, and the second half-bridge structure 72 in the thermally symmetrical structure 7 located on the right side of the infrared absorption plate 6 is on the upper side of the infrared absorption plate 6. Using FIGS. 7 to 8 as an example, the first half-bridge structure 71 in the thermally symmetrical structure 7 located on the upper side of the infrared absorption plate 6 is on the left side of the infrared absorption plate 6, and the second half-bridge structure 72 in the thermally symmetrical structure 7 located on the upper side of the infrared absorption plate 6 is on the right side of the infrared absorption plate 6; the first half-bridge structure 71 in the thermally symmetrical structure 7 located on the lower side of the infrared absorption plate 6 is on the right side of the infrared absorption plate 6, and the second half-bridge structure 72 in the thermally symmetrical structure 7 located on the lower side of the infrared absorption plate 6 is on the left side of the infrared absorption plate 6. Using FIG. 9 as an example, the first half-bridge structure 71 in the thermally symmetrical structure 7 located on the upper side of the infrared absorption plate 6 is on the upper side of the infrared absorption plate 6, and the second half-bridge structure 72 is on the lower side of the infrared absorption plate 6; in the thermally symmetrical structure 7 located on the lower side of the infrared absorption plate 6, the first half-bridge structure 71 is on the lower side of the infrared absorption plate 6, and the second half-bridge structure 72 is on the upper side of the infrared absorption plate 6.

In this manner, a distribution position of the first half-bridge structure 71 and a distribution position of the second half-bridge structure 72 in the thermally symmetrical structure 7 located on one side of the infrared absorption plate 6 are opposite to a distribution position of the first half-bridge structure 71 and a distribution position of the second half-bridge structure 72 in the thermally symmetrical structure 7 located on another side of the infrared absorption plate 6, respectively, so that the stress and deformation to which the micro-bridge structure is subject under the same force can be further reduced, the stability and impact resistance of the detector semiconductor pixels can be improved, the structural stability of the entire infrared detector can be improved, and the mechanical strength of the infrared detector can be enhanced.

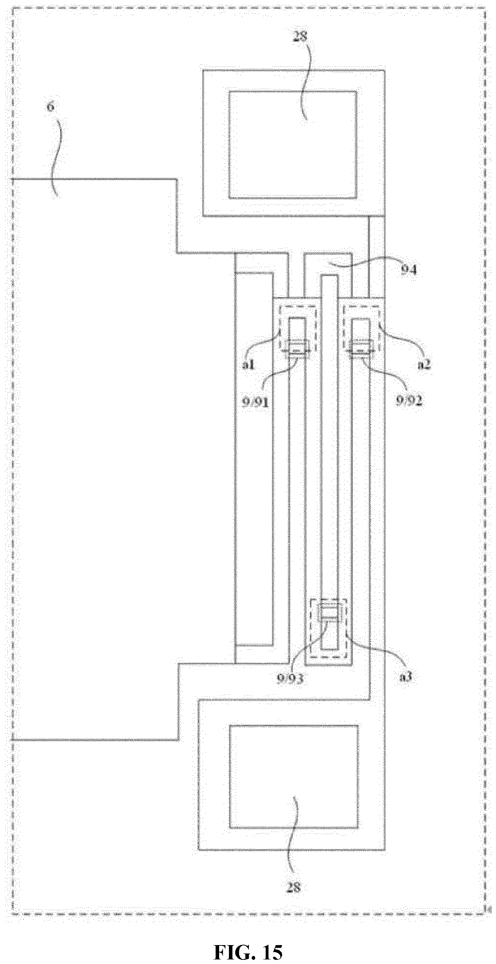

FIG. 14 is a perspective view of another detector semiconductor pixel according to an embodiment of the present application, and FIG. 15 is a partial top view of another detector semiconductor pixel according to an embodiment of the present application. Based on the preceding embodiment, in conjunction with FIGS. 1 to 3 and FIGS. 14 and 15, the beam structure 27 including the thermally symmetrical structure 7 includes at least one folded structure, the at least one folded structure is correspondingly provided with a support rod 9, the support rod 9 includes a support layer 23, and the support rod 9 and a folded part of the folded structure form a rectangle.

In an embodiment, as shown in FIGS. 1 to 3 and FIGS. 14 and 15, the beam structure 27 on the left side of the infrared absorption plate 6 and the beam structure 27 on the right side of the infrared absorption plate 6 both include the thermally symmetrical structure 7. In an embodiment, the beam structure 27 includes three folded structures corresponding to the first half-bridge structure 71, the three folded structures each are correspondingly provided with a support rod 9, each support rod 9 includes only the support layer 23, and the support rod 9 and a folded part of the corresponding folded structure form a rectangle such as rectangles a1, a2, and a3. In this manner, the support rod 9 formed by the support layer 23 improves the mechanical strength of the beam structure 27, the support rod 9 plays the role of enhancing the stability of the detector semiconductor pixels, and the structural stability of the infrared detector composed of the detector semiconductor pixels can be further improved. Moreover, the folded structure corresponding to the second half-bridge structure 72 may also be correspondingly provided with the support rod 9. For example, in FIGS. 14 and 15, the folded structure 94 corresponding to the second half-bridge structure 72 may also be correspondingly provided with support rods such as a support rod 91, a support rod 92, and a support rod 93. In this manner, the stability of the detector semiconductor pixels can also be improved. To sum up, as long as the beam structure 27 including the thermally symmetrical structure 7 includes a folded structure, the folded structure may be correspondingly provided with the support rod 9.

In an embodiment, in conjunction with FIGS. 1 to 3 and FIGS. 14 and 15, the distribution positions of the support rods 9 in the beam structures 27 located on two opposite sides of the infrared absorption plate 6 are diagonally symmetric. For example, one support rod 9 in the beam structure 27 located on the left side of the infrared absorption plate 6 is on the upper side of the infrared absorption plate 6, and two support rods 9 in the beam structure 27 located on the left side of the infrared absorption plate 6 are on the lower side of the infrared absorption plate 6; two support rods 9 in the beam structure 27 located on the right side of the infrared absorption plate 6 are on the upper side of the infrared absorption plate 6, and one support rod 9 in the beam structure 27 located on the right side of the infrared absorption plate 6 is on the lower side of the infrared absorption plate 6. In this manner, the structural stability of the infrared detector composed of the detector semiconductor pixels can be further improved.

Moreover, with respect to FIGS. 5, 6, 11, and 12, in the case where the beam structure 27 including the thermally symmetrical structure 7 includes at least one folded structure corresponding to the first half-bridge structure 71, the arrangement of the support rod 9 in FIGS. 14 and 15 may be referred to, that is, the supporting rod 9 is provided at the at least one folded structure corresponding to the first half-bridge structure 71 to further improve the structural stability of the infrared detector composed of the detector semiconductor pixels.

Optionally, the non-equilibrium difference in the thermal conductivity between the support rod 9 and the other three sides of the rectangle where the support rod 9 is located may be set to be less than or equal to 20%, that is, the difference in the heat conduction speed between the support rod 9 and the other three sides of the rectangle where the support rod 9 is located is less than or equal to 20%. The case where the heat conduction speed of the support rod 9 is 1 is used as an example, the heat conduction speed of the other three sides of the rectangle where the support rod 9 is located is greater than or equal to 0.8 and less than or equal to 1.2. In an embodiment, a thermal conductivity of the support rod 9 is the same as a thermal conductivity of the other three sides of the rectangle where the support rod 9 is located.

In an embodiment, the thermal conductivity of the support rod 91 is the same as the thermal conductivity of the other three sides other than the support rod 91 corresponding to the rectangle a1, the thermal conductivity of the support rod 92 is the same as the thermal conductivity of the other three sides other than the support rod 92 corresponding to the rectangle a2, and the thermal conductivity of the support rod 93 is the same as the thermal conductivity of the other three sides other than the support rod 93 corresponding to the rectangle a3. In this manner, the support rod 9 satisfies the preceding thermal balance relationship, and the thermal conductivity of the support rod 9 is the same as or similar to the thermal conductivity of the corresponding part of the beam structure 27 with the same heat flow direction so that the increase in the thermal conductivity of the support rod 9 is minimum, and the support rod 9 has the minimum effect on the overall thermal conductivity of the detector semiconductor pixels, that is, the support rod 9 is a structure designed based on the thermally symmetrical structure 7. The support rod 9 can improve the local stress distribution of the beam structure 27 and a thermal balance between the support rod 9 and part of the beam structure 27 can be formed.

In this manner, the detector semiconductor pixels provided in embodiments of the present application can achieve the thermal balance of the entire micro-bridge structure or the partial micro-bridge structure. The non-equilibrium difference in the thermal conductivity between each thermally symmetrical structure 7 and the support rod 9 is within 20%, the total thermal conductivity of the combined detector semiconductor pixels reaches the minimum value, and the support rod 9 can effectively improve the mechanical strength of the detector semiconductor pixels.

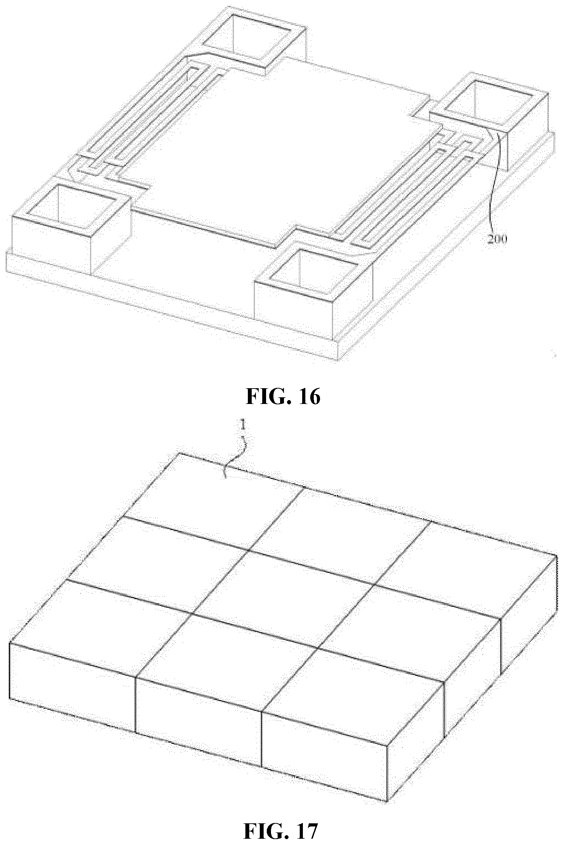

Optionally, at least one corner in the beam structure 27 is an arc-shaped corner; and/or, a width of the support rod 9 is greater than or equal to a set width. In conjunction with FIGS. 1 to 12 and FIGS. 14 and 15, in an embodiment, each corner in the beam structure 27 is a right-angled corner. In another embodiment, at least one corner in the beam structure 27 may be an arc-shaped corner so that the stress and deformation when the beam structure 27 is subject to an external force can be reduced, and the stability of the detector semiconductor pixels can be improved. Moreover, it is also feasible that the width of the support rod 9 may be greater than or equal to the set width, that is, the support rod 9 is widened so that the stress and deformation when the beam structure 27 is subject to an external force can be reduced, and the stability of the detector semiconductor pixels can be improved; it is also feasible that the folded structure at two ends of the beam structure 27 or the connecting rod 8 may be widened so that the stress and deformation when the beam structure 27 is subject to an external force can be reduced, and the stability of the detector semiconductor pixels can be improved. In an embodiment, as shown in FIG. 16, a triangular structure 200 shown in FIG. 16 may be disposed at a stress concentration position so that the stress and deformation when the beam structure 27 is subject to an external force can be reduced, and the stability of the detector semiconductor pixels can be improved.

In embodiments of the present application, the first half-bridge structure and the second half-bridge structure with the non-equilibrium difference in the thermal conductivity less than or equal to 20% form the thermally symmetrical structure, so that the total thermal conductivity of the detector semiconductor pixels can be further reduced, the infrared detection performance of the infrared detector can be improved, the stress and deformation to which a micro-bridge structure is subject under the same force can be reduced, the stability and impact resistance of the detector semiconductor pixels can be improved, the structural stability of the entire infrared detector can be improved, and the mechanical strength of the infrared detector can be enhanced.

FIG. 17 is a perspective view of an infrared detector according to an embodiment of the present application. As shown in FIG. 17, the infrared detector includes multiple detector semiconductor pixels 1 arranged in an array as described in the preceding embodiment. Therefore, the infrared detector provided in embodiments of the present application has the beneficial effects described in the preceding embodiment, which will not be repeated herein. In an embodiment, the infrared detector may be, for example, an uncooled infrared focal plane detector.

It is to be noted that as used herein, relationship terms such as "first" and "second" are used merely to distinguish one entity or operation from another. It does not necessarily require or imply any such actual relationship or order between these entities or operations. Furthermore, the term "comprising", "including" or any other variant thereof is intended to encompass a non-exclusive inclusion so that a process, method, article, or device that includes a series of elements not only includes the expressly listed elements but may also include other elements that are not expressly listed or are inherent to such process, method, article or device. In the absence of more restrictions, the elements defined by the statement "including a ..." do not exclude the presence of additional identical elements in the process, method, article, or device that includes the elements.

## Claims

1. An infrared detector, comprising a plurality of detector semiconductor pixels arranged in an array, wherein the plurality of detector semiconductor pixels are configured to convert infrared radiant energy into electrical energy for infrared detection, and each of the plurality of detector semiconductor pixels comprises:

   at least two beam structures (27), wherein each of the at least two beam structures (27) is respectively connected to an infrared absorption plate (6) and a micro-bridge column (28); wherein in each of the at least two beam structures (27), in a beam path from the infrared absorption plate (6) to a corresponding micro-bridge column (28), two parallel beam structures (27) that meet at a same node are a first half-bridge structure (71) and a second half-bridge structure (72), respectively, and the first half-bridge structure (71) and the second half-bridge structure (72) form a thermally symmetrical structure (7); and the first half-bridge structure (71) comprises a support layer (23), an electrode layer, and a passivation layer (26), the second half-bridge structure (72) comprises a support layer (23), a length of the first half-bridge structure (71) in the thermally symmetrical structure (7) is greater than a length of the second half-bridge structure (72) in the thermally symmetrical structure (7), a thickness of the first half-bridge structure (71) is greater than a thickness of the second half-bridge structure (72), and a non-equilibrium difference in a thermal conductivity between the first half-bridge structure (71) and the second half-bridge structure (72) in the thermally symmetrical structure (7) is less than or equal to 20%.

2. The infrared detector of claim 1, wherein a thermal conductivity of the first half-bridge structure (71) in the thermally symmetrical structure (7) is the same as a thermal conductivity of the second half-bridge structure (72) in the thermally symmetrical structure (7).

3. The infrared detector of claim 2, wherein the length of the first half-bridge structure (71) in the thermally symmetrical structure (7) is l1, the length of the second half-bridge structure (72) in the thermally symmetrical structure (7) is l2, and l1 and l2 satisfy the following formula:

$$\frac{l_1}{l_2} = \frac{k_1 w_1 t_1}{k_1 w_1 t_1 + k_2 w_2 t_2 + k_3 w_3 t_3}$$

wherein k1 denotes a thermal conductivity of the support layer (23), k2 denotes a thermal conductivity of the electrode layer, k3 denotes a thermal conductivity of the passivation layer (26), w1 denotes a width of the support layer (23) on each of the at least two beam structures (27), w2 denotes a width of the electrode layer on each of the at least two beam structures (27), w3 denotes a width of the passivation layer (26) on each of the at least two beam structures (27), t1 denotes an equivalent thickness of the support layer (23), t2 denotes a thickness of the electrode layer, and t3 denotes a thickness of the passivation layer (26).

4. The infrared detector of claim 1, wherein each of the at least two beam structures (27) having the thermally symmetrical structure (7) further comprises at least one connecting rod (8), and the connecting rod (8) is configured to separate the first half-bridge structure (71) and the second half-bridge structure (72) in the thermally symmetrical structure (7); and the first half-bridge structure (71) and the second half-bridge structure (72) are located on two sides of the connecting rod (8) along a direction perpendicular to the connecting rod (8), respectively, and the connecting rod (8) comprises a support layer (23), an electrode layer, and a passivation layer (26).

5. The infrared detector of claim 1, wherein a distribution position of a first half-bridge structure (71) in a thermally symmertrical structure (7) located on one side of the infrared absorption plate (6) is opposite to a distribution position of a first half-bridge structure (71) in a thermally symmertrical structure (7) located on another side of the infrared absorption plate (6), and a distribution position of a second half-bridge structure (72) in the thermally symmertrical structure (7) located on the one side of the infrared absorption plate (6) is opposite to a distribution position of a second half-bridge structure (72) in the thermally symmertrical structure (7) located on the another side of the infrared absorption plate (6).

6. The infrared detector of claim 1, wherein each of the at least two beam structures (27) has two connecting points with the infrared absorption plate (6);

   each of the at least two beam structures (27) is linearly overlapped on a corresponding micro-bridge column (28); and
   each of the plurality of detector semiconductor pixels comprises one or two groups of two micro-bridge columns (28) arranged diagonally.

7. The infrared detector of claim 1, wherein each of the plurality of detector semiconductor pixels comprises a first beam structure (271), a second beam structure (272), a third beam structure (273) and a fourth beam structure, wherein the first beam structure (271) and the second beam structure (272) are arranged along a first direction, the third beam structure (273) and the fourth beam structure are arranged along a second direction, and the first direction is perpendicular to the second direction; and
   the first beam structure (271) and the second beam structure (272) each comprise the thermally symmetrical structure (7), the third beam structure (273) and the fourth beam structure comprise only the support layer (23), a thermal conductivity of the third beam structure (273) is less than or equal to a thermal conductivity of the first beam structure (271) or a thermal conductivity of the second beam structure (272), and a thermal conductivity of the fourth beam structure is less than or equal to the thermal conductivity of the first beam structure (271) or the thermal conductivity of the second beam structure (272).

8. The infrared detector of any one of claims 1 to 7, wherein each of the at least two beam structures (27) having the thermally symmetrical structure (7) comprises at least one folded structure (94), the at least one folded structure (94) is correspondingly provided with a support rod (9), the support rod (9) comprises a support layer (23), and the support rod (9) and a folded part of the at least one folded structure (94) form a rectangle.

9. The infrared detector of claim 8, wherein a non-equilibrium difference in a thermal conductivity between the support rod (9) and other three sides of the rectangle where the support rod (9) is located is less than or equal to 20%.

10. The infrared detector of claim 8, wherein at least one corner in each of the at least two beam structures (27) is an arc-shaped corner; and/or a width of the support rod (9) is greater than or equal to a set width.

11. The infrared detector of claim 1, wherein a thickness of the support layer (23) on the first half-bridge structure (71) is the same as or different from a thickness of the support layer (23) on the second half-bridge structure (72);

   an equivalent thickness of the support layer (23) is greater than or equal to 100 angstroms and less than or equal to 2000 angstroms, a thickness of the electrode layer is greater than or equal to 100 angstroms and less than or equal to 500 angstroms, and a thickness of the passivation layer (26) is greater than or equal to 50 angstroms and less than or equal to 2000 angstroms; and
   the support layer (23) is made of one or more of silicon oxide, silicon nitride, silicon oxynitride, and amorphous carbon, the passivation layer (26) is made of one or more of silicon oxide, silicon nitride, silicon oxynitride, and amorphous carbon, and the electrode layer is made of titanium, titanium nitride, or nickel-chromium alloy.

12. The infrared detector of any one of claims 1 to 11, wherein a time during which the heat passes from the infrared absorption plate (6) through the first half-bridge structure (71) to the corresponding micro-bridge column (28) is the same as a time during which the heat passes from the infrared absorption plate (6) through the second half-bridge structure (72) to the corresponding micro-bridge column (28), thereby achieving the thermal balance on the beam structure (27).

**Patentansprüche**

1. Infrarotdetektor, der eine Vielzahl von Detektor-Halbleiterpixeln umfasst, die in einem Array angeordnet sind, wobei die Vielzahl von Detektor-Halbleiterpixeln dazu konfiguriert ist, infrarote Strahlungsenergie in elektrische Energie zur Infraroterkennung umzuwandeln, und jedes der Vielzahl von Detektor-Halbleiterpixeln umfasst:

mindestens zwei Trägerstrukturen (27), wobei jede der mindestens zwei Trägerstrukturen (27) jeweils mit einer Infrarotabsorptionsplatte (6) und einer Mikrobrückensäule (28) verbunden ist;

wobei in jeder der mindestens zwei Trägerstrukturen (27) in einem Strahlengang von der Infrarotabsorptionsplatte (6) zu einer entsprechenden Mikrobrückensäule (28) zwei parallele Trägerstrukturen (27), die sich an einem gleichen Knoten treffen, eine erste Halbbrückenstruktur (71) bzw. eine zweite Halbbrückenstruktur (72) sind, und die erste Halbbrückenstruktur (71) und die zweite Halbbrückenstruktur (72) eine thermisch symmetrische Struktur (7) bilden; und

die erste Halbbrückenstruktur (71) eine Trägerschicht (23), eine Elektrodenschicht und eine Passivierungsschicht (26) umfasst, die zweite Halbbrückenstruktur (72) eine Trägerschicht (23) umfasst,

eine Länge der ersten Halbbrückenstruktur (71) in der thermisch symmetrischen Struktur (7) größer ist als eine Länge der zweiten Halbbrückenstruktur (72) in der thermisch symmetrischen Struktur (7), eine Dicke der ersten Halbbrückenstruktur (71) größer ist als eine Dicke der zweiten Halbbrückenstruktur (72), und

eine Nicht-Gleichgewichtsdifferenz in der Wärmeleitfähigkeit zwischen der ersten Halbbrückenstruktur (71) und der zweiten Halbbrückenstruktur (72) in der thermisch symmetrischen Struktur (7) weniger als oder gleich 20 % beträgt.

2. Infrarotdetektor nach Anspruch 1, wobei die Wärmeleitfähigkeit der ersten Halbbrückenstruktur (71) in der thermisch symmetrischen Struktur (7) die gleiche ist wie die Wärmeleitfähigkeit der zweiten Halbbrückenstruktur (72) in der thermisch symmetrischen Struktur (7).

3. Infrarotdetektor nach Anspruch 2, wobei die Länge der ersten Halbbrückenstruktur (71) in der thermisch symmetrischen Struktur (7) l1 ist, die Länge der zweiten Halbbrückenstruktur (72) in der thermisch symmetrischen Struktur (7) l2 ist und l1 und l2 die folgende Formel erfüllen:

$$\frac{l_1}{l_2} = \frac{k_1 w_1 t_1}{k_1 w_1 t_1 + k_2 w_2 t_2 + k_3 w_3 t_3}$$

wobei k1 eine Wärmeleitfähigkeit der Trägerschicht (23) bezeichnet, k2 eine Wärmeleitfähigkeit der Elektrodenschicht bezeichnet, k3 eine Wärmeleitfähigkeit der Passivierungsschicht (26) bezeichnet, w1 eine Breite der Trägerschicht (23) auf jeder der mindestens zwei Trägerstrukturen (27) bezeichnet, w2 eine Breite der Elektrodenschicht auf jeder der mindestens zwei Trägerstrukturen (27) bezeichnet, w3 eine Breite der Passivierungsschicht (26) auf jeder der mindestens zwei Trägerstrukturen (27) bezeichnet, t1 eine äquivalente Dicke der Trägerschicht (23) bezeichnet, t2 eine Dicke der Elektrodenschicht bezeichnet und t3 eine Dicke der Passivierungsschicht (26) bezeichnet.

4. Infrarotdetektor nach Anspruch 1, wobei jede der mindestens zwei Trägerstrukturen (27) mit der thermisch symmetrischen Struktur (7) ferner mindestens eine Verbindungsstange (8) umfasst, und die Verbindungsstange (8) dazu konfiguriert ist, die erste Halbbrückenstruktur (71) und die zweite Halbbrückenstruktur (72) in der thermisch symmetrischen Struktur (7) zu trennen; und

die erste Halbbrückenstruktur (71) und die zweite Halbbrückenstruktur (72) auf zwei Seiten der Verbindungsstange (8) entlang einer Richtung senkrecht zu der Verbindungsstange (8) angeordnet sind, und die Verbindungsstange (8) eine Trägerschicht (23), eine Elektrodenschicht und eine Passivierungsschicht (26) umfasst.

5. Infrarotdetektor nach Anspruch 1, wobei eine Verteilungsposition einer ersten Halbbrückenstruktur (71) in einer thermisch symmetrischen Struktur (7), die sich auf einer Seite der Infrarotabsorptionsplatte (6) befindet, einer Verteilungsposition einer ersten Halbbrückenstruktur (71) in einer thermisch symmetrischen Struktur (7), die sich auf einer anderen Seite der Infrarotabsorptionsplatte (6) befindet, gegenüberliegt und eine Verteilungsposition einer zweiten Halbbrückenstruktur (72) in der thermisch symmetrischen Struktur (7), die auf der einen Seite der Infrarotabsorptionsplatte (6) angeordnet ist, einer Verteilungsposition einer zweiten Halbbrückenstruktur (72) in der thermisch symmetrischen Struktur (7), die auf der anderen Seite der Infrarotabsorptionsplatte (6) angeordnet ist, gegenüberliegt.

6. Infrarotdetektor nach Anspruch 1, wobei jede der mindestens zwei Trägerstrukturen (27) zwei Verbindungspunkte mit der Infrarotabsorptionsplatte (6) aufweist;

jede der mindestens zwei Trägerstrukturen (27) linear auf einer entsprechenden Mikrobrückensäule (28) überlagert ist; und
jedes der Vielzahl von Detektor-Halbleiterpixeln eine oder zwei Gruppen von zwei diagonal angeordneten Mikrobrückensäulen (28) umfasst.

7. Infrarotdetektor nach Anspruch 1, wobei jedes der Vielzahl von Detektor-Halbleiterpixeln eine erste Trägerstruktur (271), eine zweite Trägerstruktur (272), eine dritte Trägerstruktur (273) und eine vierte Trägerstruktur umfasst, wobei die erste Trägerstruktur (271) und die zweite Trägerstruktur (272) entlang einer ersten Richtung angeordnet sind, die dritte Trägerstruktur (273) und die vierte Trägerstruktur entlang einer zweiten Richtung angeordnet sind und die erste Richtung senkrecht zur zweiten Richtung verläuft; und
die erste Trägerstruktur (271) und die zweite Trägerstruktur (272) jeweils die thermisch symmetrische Struktur (7) umfassen, die dritte Trägerstruktur (273) und die vierte Trägerstruktur nur die Trägerschicht (23) umfassen, die dritte Trägerstruktur (273) und die vierte Trägerstruktur nur die Trägerschicht (23) umfassen, eine Wärmeleitfähigkeit der dritten Trägerstruktur (273) kleiner oder gleich einer Wärmeleitfähigkeit der ersten Trägerstruktur (271) oder einer Wärmeleitfähigkeit der zweiten Trägerstruktur (272) ist, und eine Wärmeleitfähigkeit der vierten Trägerstruktur kleiner oder gleich der Wärmeleitfähigkeit der ersten Trägerstruktur (271) oder der Wärmeleitfähigkeit der zweiten Trägerstruktur (272) ist.

8. Infrarotdetektor nach einem der Ansprüche 1 bis 7, wobei jede der mindestens zwei Trägerstrukturen (27), welche die thermisch symmetrische Struktur (7) aufweist, mindestens eine gefaltete Struktur (94) umfasst, die mindestens eine gefaltete Struktur (94) entsprechend mit einem Trägerstab (9) versehen ist, der Trägerstab (9) eine Trägerschicht (23) aufweist und der Trägerstab (9) und ein gefalteter Teil der mindestens einen gefalteten Struktur (94) ein Rechteck bilden.

9. Infrarotdetektor nach Anspruch 8, wobei eine Nicht-Gleichgewichtsdifferenz in der Wärmeleitfähigkeit zwischen dem Trägerstab (9) und den anderen drei Seiten des Rechtecks, in dem der Trägerstab (9) angeordnet ist, weniger als oder gleich 20 % beträgt.

10. Infrarotdetektor nach Anspruch 8, wobei mindestens eine Ecke in jeder der mindestens zwei Trägerstrukturen (27) eine bogenförmige Ecke ist; und/oder eine Breite des Trägerstabes (9) größer oder gleich einer festgelegten Breite ist.

11. Infrarotdetektor nach Anspruch 1, wobei eine Dicke der Trägerschicht (23) auf der ersten Halbbrückenstruktur (71) gleich oder verschieden von einer Dicke der Trägerschicht (23) auf der zweiten Halbbrückenstruktur (72) ist;

eine äquivalente Dicke der Trägerschicht (23) größer oder gleich 100 Angström und kleiner oder gleich 2000 Angström, eine Dicke der Elektrodenschicht größer oder gleich 100 Angström und kleiner oder gleich 500 Angström ist, und eine Dicke der Passivierungsschicht (26) größer oder gleich 50 Angström und kleiner oder gleich 2000 Angström ist und

die Trägerschicht (23) aus einem oder mehreren von Siliziumoxid, Siliziumnitrid, Siliziumoxynitrid und amorphem Kohlenstoff besteht, die Passivierungsschicht (26) aus einem oder mehreren von Siliziumoxid, Siliziumnitrid, Siliziumoxynitrid und amorphem Kohlenstoff besteht, und die Elektrodenschicht aus Titan, Titannitrid oder einer NickelChrom-Legierung besteht.

12. Infrarotdetektor nach einem der Ansprüche 1 bis 11, wobei eine Zeit, während der die Wärme von der Infrarotabsorptionsplatte (6) durch die erste Halbbrückenstruktur (71) zu der entsprechenden Mikrobrückensäule (28) gelangt, die gleiche ist wie eine Zeit, während der die Wärme von der Infrarotabsorptionsplatte (6) durch die zweite Halbbrückenstruktur (72) zu der entsprechenden Mikrobrückensäule (28) gelangt, wodurch das thermische Gleichgewicht auf der Trägerstruktur (27) erreicht wird.

**Revendications**

1. Détecteur infrarouge, comprenant une pluralité de pixels semi-conducteurs de détecteur agencés en réseau, dans lequel la pluralité de pixels semi-conducteurs de détecteur sont configurés pour convertir l'énergie rayonnante infrarouge en énergie électrique pour une détection infrarouge, et chacun de la pluralité de pixels semi-conducteurs de détecteur comprend :

au moins deux structures de poutre (27), où chacune des au moins deux structures de poutre (27) est respectivement reliée à une plaque d'absorption infrarouge (6) et à une colonne de micro-pont (28) ;
dans lequel, dans chacune des au moins deux structures de poutre (27), dans un trajet de poutre allant de la plaque d'absorption infrarouge (6) à une colonne de micro-pont correspondante (28), deux structures de poutre parallèles (27) qui se rencontrent au niveau d'un même noeud sont une première structure en demi-pont (71) et une deuxième structure en demi-pont (72), respectivement, et
la première structure en demi-pont (71) et la deuxième structure en demi-pont (72) forment une structure thermiquement symétrique (7) ; et
la première structure en demi-pont (71) comprend une couche de support (23), une couche d'électrode et une couche de passivation (26), la deuxième structure en demi-pont (72) comprend une couche de support (23),
une longueur de la première structure en demi-pont (71) dans la structure thermiquement symétrique (7) est supérieure à une longueur de la deuxième structure en demi-pont (72) dans la structure thermiquement symétrique (7), une épaisseur de la première structure en demi-pont (71) est supérieure à une épaisseur de la deuxième structure en demi-pont (72), et une différence hors équilibre de conductivité thermique entre la première structure en demi-pont (71) et la deuxième structure en demi-pont (72) dans la structure thermiquement symétrique (7) est inférieure ou égale à 20%.

2. Détecteur infrarouge de la revendication 1, dans lequel une conductivité thermique de la première structure en demi-pont (71) dans la structure thermiquement symétrique (7) est la même qu'une conductivité thermique de la deuxième structure en demi-pont (72) dans la structure thermiquement symétrique (7).

3. Détecteur infrarouge de la revendication 2, dans lequel la longueur de la première structure en demi-pont (71) dans la structure thermiquement symétrique (7) est l1, la longueur de la deuxième structure en demi-pont (72) dans la structure thermiquement symétrique (7) est l2, et l1 et l2 satisfont la formule suivante :

$$\frac{l_1}{l_2} = \frac{k_1 w_1 t_1}{k_1 w_1 t_1 + k_2 w_2 t_2 + k_3 w_3 t_3}$$

dans laquelle k1 désigne une conductivité thermique de la couche de support (23), k2 désigne une conductivité thermique de la couche d'électrode, k3 désigne une conductivité thermique de la couche de passivation (26), w1 désigne une largeur de la couche de support (23) sur chacune des au moins deux structures de poutre (27), w2 désigne une largeur de la couche d'électrode sur chacune des au moins deux structures de poutre (27), w3 désigne une largeur de la couche de passivation (26) sur chacune des au moins deux structures de poutre (27), t1 désigne une épaisseur équivalente de la couche de support (23), t2 désigne une épaisseur de la couche d'électrode et t3 désigne une épaisseur de la couche de passivation (26).

4. Détecteur infrarouge de la revendication 1, dans lequel chacune des au moins deux structures de poutre (27) ayant la structure thermiquement symétrique (7) comprend en outre au moins une bielle (8), et la bielle (8) est configurée pour séparer la première structure en demi-pont (71) et la deuxième structure en demi-pont (72) dans la structure thermiquement symétrique (7) ; et la première structure en demi-pont (71) et la deuxième structure en demi-pont (72) sont situées sur deux côtés de la bielle (8) le long d'une direction perpendiculaire à la bielle (8), respectivement, et la bielle (8) comprend une couche de support (23), une couche d'électrode et une couche de passivation (26).

5. Détecteur infrarouge de la revendication 1, dans lequel une position de répartition d'une première structure en demi-pont (71) dans une structure thermiquement symétrique (7) située d'un côté de la plaque d'absorption infrarouge (6) est opposée à une position de répartition d'une première structure en demi-pont (71) dans une structure thermiquement symétrique (7) située d'un autre côté de la plaque d'absorption infrarouge (6), et une position de répartition d'une deuxième structure en demi-pont (72) dans la structure thermiquement symétrique (7) située d'un côté de la plaque d'absorption infrarouge (6) est opposée à une position de répartition d'une deuxième structure en demi-pont (72) dans la structure thermiquement symétrique (7) située de l'autre côté de la plaque d'absorption infrarouge (6).

6. Détecteur infrarouge de la revendication 1, dans lequel chacune des au moins deux structures de poutre (27) a deux points de liaison avec la plaque d'absorption infrarouge (6) ;

chacune des au moins deux structures de poutre (27) se chevauche linéairement sur une colonne de micro-pont correspondante (28) ; et chacun de la pluralité de pixels semi-conducteurs de détecteur comprend un ou deux groupes de deux colonnes de micro-pont (28) agencées en diagonale.

7. Détecteur infrarouge de la revendication 1, dans lequel chacun de la pluralité de pixels semi-conducteurs de détecteur comprend une première structure de poutre (271), une deuxième structure de poutre (272), une troisième structure de poutre (273) et une quatrième structure de poutre, dans lequel la première structure de poutre (271) et la deuxième structure de poutre (272) sont agencées le long d'une première direction, la troisième structure de poutre (273) et la quatrième structure de poutre sont agencées le long d'une deuxième direction, et la première direction est perpendiculaire à la deuxième direction ; et la première structure de poutre (271) et la deuxième structure de poutre (272) comprennent chacune la structure thermiquement symétrique (7), la troisième structure de poutre (273) et la quatrième structure de poutre comprennent uniquement la couche de support (23), une conductivité thermique de la troisième structure de poutre (273) est inférieure ou égale à une conductivité thermique de la première structure de poutre (271) ou à une conductivité thermique de la deuxième structure de poutre (272), et une conductivité thermique de la quatrième structure de poutre est inférieure ou égale à la conductivité thermique de la première structure de poutre (271) ou à la conductivité thermique de la deuxième structure de poutre (272).

8. Détecteur infrarouge de l'une quelconque des revendications 1 à 7, dans lequel chacune des au moins deux structures de poutre (27) ayant la structure thermiquement symétrique (7) comprend au moins une structure pliée (94), l'au moins une structure pliée (94) est pourvue de manière correspondante d'une tige de support (9), la tige de support (9) comprend une couche de support (23), et la tige de support (9) et une partie pliée de l'au moins une structure pliée (94) forment un rectangle.

9. Détecteur infrarouge de la revendication 8, dans lequel une différence hors équilibre de conductivité thermique entre la tige de support (9) et les trois autres côtés du rectangle où se trouve la tige de support (9) est inférieure ou égale à 20%.

10. Détecteur infrarouge de la revendication 8, dans lequel au moins un coin dans chacune des au moins deux structures de poutre (27) est un coin en forme d'arc ; et/ou une largeur de la tige de support (9) est supérieure ou égale à une largeur définie.

11. Détecteur infrarouge de la revendication 1, dans lequel une épaisseur de la couche de support (23) sur la première structure en demi-pont (71) est identique à une épaisseur de la couche de support (23) sur la deuxième structure en demi-pont (72) ou différente de celle-ci ;

une épaisseur équivalente de la couche support (23) est supérieure ou égale à 100 angströms et inférieure ou égale à 2000 angströms, une épaisseur de la couche d'électrode est supérieure ou égale à 100 angströms et inférieure ou égale à 500 angströms, et une épaisseur de la couche de passivation (26) est supérieure ou égale à 50 angströms et inférieure ou égale à 2000 angströms ; et
la couche de support (23) est constituée d'un ou plusieurs éléments parmi l'oxyde de silicium, le nitrure de silicium, l'oxynitrure de silicium et le carbone amorphe, la couche de passivation (26) est constituée d'un ou plusieurs éléments parmi l'oxyde de silicium, le nitrure de silicium, l'oxynitrure de silicium et le carbone amorphe, et la couche d'électrode est constituée de titane, de nitrure de titane ou d'un alliage nickel-chrome.

12. Détecteur infrarouge de l'une quelconque des revendications 1 à 11, dans lequel le temps pendant lequel la chaleur passe de la plaque d'absorption infrarouge (6) à travers la première structure en demi-pont (71) jusqu'à la colonne de micro-pont correspondante (28) est identique au temps pendant lequel la chaleur passe de la plaque d'absorption infrarouge (6) à travers la deuxième structure en demi-pont (72) jusqu'à la colonne de micro-pont correspondante (28), réalisant ainsi l'équilibre thermique sur la structure de poutre (27).

FIG. 1

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

FIG. 13

FIG. 14

**FIG. 15**

**FIG. 16**

**FIG. 17**

**EP 3 933 360 B1**

**REFERENCES CITED IN THE DESCRIPTION**

**Patent documents cited in the description**

- EP 2113756 A1
- EP 2208975 A1